Europäisches Patentamt

(19) European Patent Office

Office européen des brevets

(11) Veröffentlichungsnummer: **0 174 296**
**B1**

(12) **EUROPÄISCHE PATENTSCHRIFT**

(45) Veröffentlichungstag der Patentschrift: **13.06.90**

(21) Anmeldenummer: **85890205.9**

(22) Anmeldetag: **03.09.85**

(51) Int. Cl.⁵: **B 29 D 23/00**, B 29 D 22/00, B 29 C 67/14

(54) **Verfahren zur Herstellung von Hohlkörpern.**

(30) Priorität: **07.09.84 DE 3432905**

(43) Veröffentlichungstag der Anmeldung:
**12.03.86 Patentblatt 86/11**

(45) Bekanntmachung des Hinweises auf die
Patenterteilung:
**13.06.90 Patentblatt 90/24**

(84) Benannte Vertragsstaaten:
**AT BE CH DE FR GB IT LI LU NL SE**

(56) Entgegenhaltungen:
**DE-A-1 943 820
DE-B-1 060 197
FR-A- 324 123
FR-A-1 337 431
FR-A-2 536 131
GB-A-1 245 198
GB-A-1 510 935
US-A-4 106 967**

(73) Patentinhaber: **Puck, Alfred, Prof., Dr.-Ing.
Am Ahlberg 33
D-3524 Immenhausen-Mariendorf (DE)**

(72) Erfinder: **Puck, Alfred, Prof.Dr.-Ing.
Am Ahlberg 33
D-3524 Immenhausen-Mariendorf (DE)**
Erfinder: **Rau, Thomas, Dipl.-Ing.
Buttenstrasse 11
D-3528 Liebenau/Niedermeiser (DE)**

(74) Vertreter: **Walther, Horst, Dipl.-Ing.
Wilhelmshöher Allee 275 Postfach 41 01 08
D-3500 Kassel (DE)**

EP 0 174 296 B1

**Beschreibung**

Die Erfindung bezieht sich auf ein Verfahren zur Herstellung von Hohlkörpern, z.B. Rohren, rohrförmigen Torsionsstäben, Druckbehältern oder dergleichen, welche aus faserverstärktem Kunststoff aufgebaut sind und welche aus zumindest zwei Schichten mit unterschiedlich zur Längsrichtung orientierten Fasern bestehen, die sich zumindest teilweise über den gesamten Hohlkörper erstrecken und die Schichten bei Gebrauchstemperatur hartelastischen Kunststoff aufweisen und mit Kräften beaufschlagt werden.

Seit geraumer Zeit bemüht man sich darum, sehr leichte aber hochelbelastbare Bauteile zu erzielen. Dies gelingt bei der Verwendung von faserverstärkten Kunststoffen. Diese Stoffe und die daraus hergestellten Bauteile haben in erster Linie den Vorteil, daß man bei geringer Dichte sehr hohe Festigkeiten bei Beanspruchungen in der Fasserrichtung erzielen kann. Sie haben aber andererseits den gravierenden Nachteil, daß bei Beanspruchungen quer zur Fasserrichtung eine sehr niedrige Festigkeit und eine extrem niedrige Dehnbarkeit vorliegt. Man hat nun seit langem versucht, durch besser geeignete Kunststoffe, insbesondere solche mit vergrößerter Dehnbarkeit diesen Mangel zu überwinden. Durch den gezielten Einbau günstiger Eigenspannungen kann man hingegen Verbesserungen erzielen, die ein Vielfaches der Verbesserungen durch Veränderung des Kunststoffes aumachen.

Aus der DE—A—1 28 42 531 ist ein derartiges Verfahren zur Herstellung von Kunststoffrohren bekannt, wobei in zwei Herstellvorgängen ein zweischichtiges Rohr aufgebaut wird. Zuerst wird ein Innenrohr mit im wesentlichen im Umfang verlaufenden Fasern erzeugt, so daß die Fasern mit der Längsrichtung des Rohres einen Winkel von im wesentlichen 90 Grad einschließen, wobei die Abweichungen lediglich dadurch bedingt sind, daß eine unendliche Faser um das Rohr gewickelt werden soll, so daß ein geringer Steigungswinkel entsteht. Dieses Rohr wird ausgehärtet, worauf in das Innere ein Druckmittel eingebracht und gleichzeitig von außen eine axialwirkende Druckkraft aufgebracht wird. Der Kunststoff, welcher die einzelnen Fasern miteinander verbindet, ist ein hartelastischer Kunststoff, so daß eine elastische Verformung auftritt. Auf diesen so elastisch verformten Körper wird eine zweite Rohrschicht mit Glasfasern aufgebracht, wobei die Galsfasern im wesentlichen in Achsrichtung orientiert sind. Dieses zweite Rohr, welches mit dem ersten Rohr, z.B. über den hartelastischen Kunststoff verbunden ist, gelangt ebenfalls zur Aushärtung, wonach das erste Rohr vom Druckmedium und vom Druck in Axialrichtung entlastet wird. Bei diesem Entlastungsvorgang entspannt sich das Innenrohr nur teilweise, da in dem äußeren Rohr bei diesem Vorgang entgegengerichtete Zugkräfte entstehen. Es bleiben zumindest im inneren Rohr die erwünschten Druckspannungen quer zur Faserrichtung als Eigenspannungen erhalten.

Dieses bekannte Verfahren ist ein Kaltverfahren. Dabei werden die einzelnen Schichten erst erzeugt. Das Einbringen der Eigenspannung kann bei diesem Verfahren nur dadurch erreicht werden, daß auf der ersten ausgehärteten gespannten Schicht ein zweiter Massenauftrag erfolgt, da sonst die Kräfte in der ersten Schicht nicht stabilisiert werden können.

Dieses Verfahren ist demzufolge sehr aufwendig und auch recht umständlich.

Der Erfindung liegt die Aufgabe zugrunde, ein Verfarhen zur Herstellung von Hohlkörpern, insbesondere Rohren, Torsionsrohren, Druckrohren, Druckbehältern oder dergleichen zu schaffen, welches einfacher ist, gleichwohl aber die Eigenspannungen in die Schichten des Hohlkörpers einbringt.

Das wird erfindungsgemäß dadurch erreicht, daß zumindest zwei über/oder ineinanderliegende Schichten, bei denen die Faserorientierung zur Hohlkörperlängsaches unterschiedlich ist, bis in etwa zum Bereich der Glasübergangstemperatur erhitzt werden, worauf zumindest eine der Schichten mit einer Kraft beaufschlagt wird und darauf die Schichten in diesem Spannungszustand unterhalb der Glastemperatur abgekühlt werden.

Dabei weist die Faserorientierung in der einen Schicht einen positiven Winkel und die Faserorientierung in der anderen Schicht einen negativen Winkel zur Hohlkörperlängsachse auf.

Dadurch, daß der Kunststoff lediglich durch Wärmeeinwirkung weichelastisch verformbar wird, können in den bereits vollständig geformten Hohlkörper Kräfte auf einfache Weise eingeleitet werden, die nach Abkühlung des Hohlkörpers und Abbau der Kräfte zu erwünschten Eigenspannungszuständen führen, wobei weiter verschiedene Wickelwinkel mehrerer Lagen mit verschiedener Dicke und Schichten, die ineinander verflochten werden können, erreichbar sind, so daß eine leichte Anpassung an die Arbeitsbedingungen und die geometrische Form des Hohlkörpers durchgeführt werden kann, da die Form eines Hohlkörpers auch die optimalen Wickelwinkel mitbestimmt.

Wird der Hohlkörper erhitzt und die Innenwandung des Hohlkörpers mit einer radial nach außen weisenden Druckkraft, z.B. einem Druckmedium un der Hohlkörper mit einer Zugkraft, die insgesamt absolut gesehen gleich/kleiner als die radial nach außen weisende Druckkraft ist, während der Abkühlung in der hartelastischen Zustand des Kunststoffes beauschlagt, wobei die Winkel der Faserorientierung zur Hohlkörperlängsachse zwischen etwa 55° und etwa 75° betragen, so kann ein Körper erhalten werden, welcher für Innendruck besonders geeignet ist, wobei die Beanspruchbarkeit auf Axial- und Umfangsspannung in etwa gleich sein kann. Derartige Rohre sind z.B. fest verlegte Rohrleitungen, biegeweiche Torsionwellen usw.

Wird der Hohlkörper erhitzt und die Innenwandung des Hohlkörpers mit einer radial nach außen wirkenden Druckkraft, z.B. einem Druckmedium, und mit einer in Achsrichtung wirkenden Zugkraft während der Abkühlung in den hartelastischen Zustand des Kunststoffes beaufschlagt, wobei die Winkel der Faserorientierung zur Hohlkörperlängsachse zwischen 10° und 55° betragen, so wird ein besonders biegesteifer Körper erhalten, wie er beispielsweise für biegestife Torsionwellen und dgl. von Vorteil ist. Beträgt der Winkel zirka 45° so wird Torsionwelle für Beanspruchungen mit wechselnder Drehriehtung bei mittlerer Biegesteifheit erhalten.

Ein idealer Innendruckbehälter wird dann erhalten, wenn der Hohlkörper erhitzt wrid, un die Innenwandung des Hohlkörpers mit einer radial nach außen wirkenden Druckkraft, insbesondere mit einem Druckmedium während der Abkühlung in den hartelastischen Zustand des Kunststoffes beaufschlagt wird, wobei der Winkel der Faseriorientierung zur Hohlkörperlängsachse zirka 55° beträgt.

Wird der Hohlkörper erhitzt und während der Abkühlung in den hartelastischen Zustand des Kunststoffes zusätzlich mit einem Torsionsmoment beaufschlalgt, so können auch Vorspannungen in nur eine Schicht eingebracht werden, die in Fällen von einseitiger extremer Torsionsbeanspruchung von besonderem Vorteil sein können.

Im folgenden wird die Erfindung anhand der Zeichnungen und der Beispiele näher erläutert.

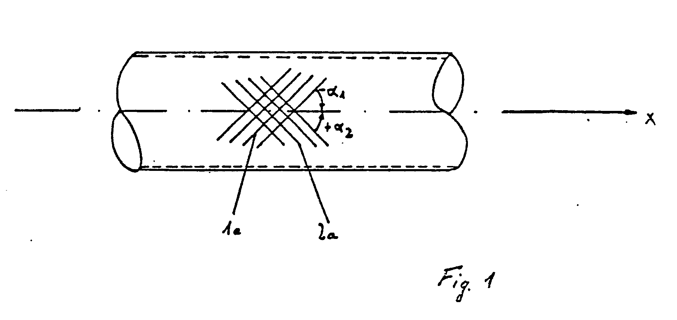

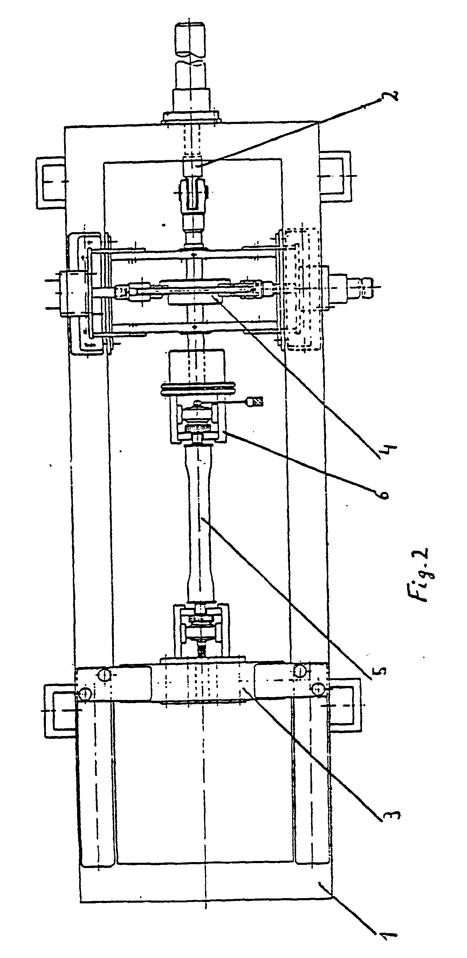

Es sei in Fig. 1 in schematischer Darstellung ein nach dem erfindungsgemäßen Verfahren hergestelltes Rohr, Fig. 2 eine Vorrichtung zur Aufbringung der Spannungen, dargestellt.

In Fig. 1 ist ein Rohr mit zwei Lagen 1a und 2a dargestellt, die entsprechende Winkel $\alpha 1$ und $\alpha 2$ de Faserorientierung mit der Hohlkörperlängsachse × aufweisen.

Fig. 2 zeigt eine Vorrichtung, mit der in einem Hohlkörper (Rohr) die gewünschten Eingenspannungen erzeugt werden. Mit 1 ist hierbei der Rahmen der Vorrichtung bezeichnet. Die Axialkräfte werden durch die auf den Rahmen bewegliche Zug- bzw. Druckbelastungseinheit 2 sowie das Gegenlager 3 aufgebracht. Das erforderliche Drehmoment wird durch die Belastungseinheit Torsion 4 erzeugt. Mit 5 ist der Hohlkörper bezeichnet. Durch die Klaue 6 wird der Hohlkörper mit dem gewünschten Innendruck beaufschlagt (nicht dargestellt), wobei der Innendruck auch durch ein Druckmedium aufdgebracht werden kann.

## Beispiel 1

Auf einem Wickeldorn wurde entsprechend Tabelle 1 Beispiel 1 unter einem Wickelwinkel von 45° eine Schichte in 1 mm Dicke aufgebracht. Diese Schicht wies eine Faser mit einem Faserdurchmesser von 10 µm auf, wobei der Rohrinnendurchmesser 25 mm betrug. Auf diese Schichte wurde eine weitere Schichte mit einer Dicke von 1 mm aus glasfaserverstärktem Kunststoff aufebracht, wobei der Wickelwinkel −45°C betrug. Als Harz wurde ein Epoxidharz verwendet, obwohl andere Kunststoffe, z.B. Thermoplaste, auch verwendet werden können. Die Faser bestand aus sogenanntem E-Glas. Anstelle von E-Glas kann auch R-Glas, Aramidfasern, Kohlenstoffasern und dgl. verwendet werden.

Das Rohr wurde aushärten gelassen und nach vollständig erfolgter Aushärtung auf 150°C also bis zur Glasübergangstemperatur erhitzt und in der Vorrichtung innen mit einem Druck von 138 bar beaufschlagt, wobei gleichzeitig eine Axialzugkraft von 8,5 kN und weiters ein Torsionsmoment von 229 Nm aufgebracht wurde.

An einem Rohr gemäß Beispiel 1 und an einem identen Rohr jedoch ohne die Schritte des erfindungsgemäßen Verfahrens wurde das maximale Drehmoment bestimmt, welches bei dem erfindungsgemäßen Rohr 860 Nm, hingegen bei dem anderen 268 Nm betrug. Durch das erfindungsgemäße Verfahren konnte eine Steigerung auf zirka 300% erreicht werden.

## Beispiel 2

Es wurden entsprechend Beispiel 1, jedoch mit den Parametern gemäß Beispiel 2 der Tabelle 1, Rohre mit und ohne Einhaltung des erfindungsgemäßen Verfahrens hergestellt, wonach das maximale Drehmoment bestimmt wurde. Das Rohr, welches nach dem erfindungsgemäßen Verfahren hergestellt wurde, wies ein maximales Drehmoment von 520 Nm wohingegen das andere Rohr lediglich ein maximales Drehmoment von 260 Nm aufwies. Es konnte somit eine Verdoppelung der Eigenschaften erreicht werden.

## Beispiel 3

Es wurde gemäß Beispiel 1 gerarbeitet, wobei die Parameter gemäß Beispiel 3 der Tabelle 1 eingehalten wurden. Das nach diesem Beispiel erhaltene Rohr ist für ein Drehmoment geeignet, welches in eine Richtung wirkt. Durch das erfindungsgemäße Verfahren konnte eine Steigerung des Drehmomentes von 245 Nm auf 430 Nm erreicht werden.

## Beispiel 4

Es wurde gemäß Beispiel 1 gearbeitet, wobei die Parameter gemäß Beispiel 4 der Tabelle 2 eingehalten wurden. Dieses Rohr ist für die Beanspruchung durch ein in seiner Richtung wechselndes Drehmoment besonders geeignet, wobei durch das erfindungsgemäße Verfahren das maximale Drehmoment von 286 Nm auf 572 Nm, somit eine Steigerung um 100%, angehoben werden konnte.

## Beispiel 5

Es wurde gemäß Beispiel 1, jedoch unter Einhaltung der Parameter gemäß Beispiel 5, vorgegangen, wobei ein Rohr für hohe Innendruckbeanspruchung erhalten wurde. Mit dem erfindungsgemäßen Verfahren konnte eine Steigerung von 43 bar auf 170 bar für den maximalen Innendruck erreicht werden, womit eine zirka Vervierfachung des maximalen Innendruckes erhalten wurde.

Beispiel 6

Es wurde gemäß Beispiel 1 gearbeitet, wobei die Parameter gemäß Tabelle 2 Biespiel 6 eingehalten wurden. Ein derartiges Rohr ist für Innendruckbeanspruchungen geeignet und es konnte durch das erfindungsgemäß Verfahren eine Steigerung des maximalen Innendruckes von 38 bar auf 115 bar erreicht werden, sodaß zirka eine Verdreifachung des maximalen Innendruckes erreicht werden konnte.

Tabelle 1:

| Parameter | Beispiel 1 | Beispiel 2 | Beispiel 3 |
|---|---|---|---|
| Schicht 1:<br>Schichtdicke (mm)<br>Wickelwinkel | 1<br>+ 45° | 1<br>+ 54,74° | 1<br>+ 60° |
| Schicht 2:<br>Schichtdicke (mm)<br>Wickelwinkel | 1<br>- 45° | 1<br>- 54,74° | 1<br>- 60° |
| Faserart | E-Glas | E-Glas | E-Glas |
| Harzart | Epoxid | Epoxid | Epoxid |
| Belastungs-temperatur (°C) | 150 | 150 | 150 |
| Rohrinnen-durchmesser (mm) | 25 | 25 | 25 |
| Wanddicke (mm) | 2 | 2 | 2 |
| Innendruck (bar) | 138 | 184 | 207 |
| Axialkraft (KN) | 8,5 | 0 | - 4,25 |
| Torsions-moment (Nm) | 229 | 216 | 198 |

4

Tabelle 2:

| Parameter | Beispiel 4 | Beispiel 5 | Beispiel 6 |
|---|---|---|---|
| **Schicht 1:** | | | |
| Schichtdicke (mm) | 1 | 1 | 1 |
| Wickelwinkel | + 45° | + 54,74° | + 60° |
| **Schicht 2:** | | | |
| Schichtdicke (mm) | 1 | 1 | 1 |
| Wickelwinkel | - 45° | - 54,74° | - 60° |
| Faserart | E-Glas | E-Glas | E-Glas |
| Harzart | Epoxid | Epoxid | Epoxid |
| Belastungs- temperatur ($^0$C) | 150 | 150 | 150 |
| Rohrinnen- durchmesser (mm) | 25 | 25 | 25 |
| Wanddicke (mm) | 2 | 2 | 2 |
| Innendruck (bar) | 276 | 368 | 414 |
| Axialkraft (KN) | 17 | 0 | - 8,5 |

**Patentansprüche**

1. Verfahren zur Herstellung von Hohlkörpern, z.B. Rohren, rohrförmigen Torsionsstäben, Druckbehältern oder dgl., welche aus faserverstärktem Kunststoff aufgebaut sind und welche aus zumindest zwei Schichten mit unterschiedlich zur Längsrichtung orientenerten Fasern bestehen, die sich zumindest teilweise über den gesamten Hohlkörper erstrecken, und die Schicten bei Gebrauchstemperatur hartelastischen Kunststoff aufweisen und mit Kräften beaufschalgt werden dadurch gekennzeichnet, daß zumindest zwei über- oder ineinanderliegende Schichten, bei denen die Faserorientierung zur Hohlkörperlängsachse unterschiedlich ist, bis in etwa zum Bereich der Glasübergangstemperatur erhitzt werden, worauf zumindest eine der Schichten mit einer Kraft beaufschlagt wird und darauf die Schichten in diesem Spannungszustand unterhalb der Glastemperatur abgekühlt werden.

2. Verfahren nach Anspruch 1 dadurch gekennzeichnet, daß die Faserorientierung in der einen Schicht einen positiven Winkel und die Faserorienterung in der anderen Schicht einen negativen Winkel zur Hohlkörperlängsachse bildet.

3. Verfahren nach Anspruch 1 dadurch gekennzeichnet, daß der Hohlkörper erhitzt wird und die Innenwandung des Hohlkörpers mit einer radial nach außen weisenden Druckkraft, z.B. einem Druckmedium und der Hohlkörper mit einer Zugkraft, die insgesamt absolut gesehen gleich/kleiner als die radial nach außen weisende Druckkraft ist, während der Abkühlung in den hartelastischen Zustand des Kunststoffes beaufschlagt wird, wobei die Winkel der Faserorienteirung zur Hohlkörperlängsachse zwischen etwa 55° und etwa 75° betragen.

4. Verfahren nach Anspruch 1 dadurch gekennzeichnet, daß der Hohlkörper erhitzt wird und die Innenwandung des Hohlkörpers mit einer radial nach außen wirkenden Druckkraft, z.B. einem Druckmedium und einer in Achsrichtung wirkenden Zugkraft während der Abkühlung in den hartelastischen Zustand des Kunststoffes beaufschlagt wird, wobei die Winkel der Faserorientierung zur Hohlkörperlängsachse zwischen 10° und 55° betragen.

5. Verfahren nach Anspruch 1 dadurch gekennzeichnet, daß der Hohlkörper erhitzt wird und die Innenwandung des Hohlkörpers mit einer radial und axial nach außen wirkenden Druckkraft, insbesondere mit einem Druckmedium während der Abkühlung in den hartelastischen Zustand des Kunststoffes beaufschlagt wird, wobei der Winkel der Faserorientierung zur der Hohlkörperlängsaches ca. 55° beträgt.

6. Verfahren nach einem der Ansprüche 1 bis 4, dadurch gekennzeichnet, daß der Hohlkörper erhitzt und während der Abkühlung in den hartelastischen Zustand des Kunststoffes zusätzlich mit einem Torsionsmoment beaufschlagt wird.

## Revendications

1. Procédé fabriquer des éléments creux, notamment des tubes, des barres de torsion tubulaires, des réservoirs à pression ou des éléments similaires, qui sont faits de matière synthétique renforcée par des fibres et comportant au moins deux couches ayant des fibres orientées différement par rapport à la direction longitudinale et s'étendant au moins partiellement sur tout l'élément, les couches comportant de la matière synthétique à fort module d'élasticité à la température d'utilisation et étant sollicitées par des forces, caractérisé en ce qu'au moins deux couches disposées l'une sur l'autre ou l'une dans l'autre, et dont les orientations respectives des fibres par rapport à l'axe longitudinal de l'élément creux sont différentes, sont chauffées approximativement jusqu'à la zone de température de transition vitreuse, puis au moins l'une des couches et soumise à une force, et ensuite les couches sont refroidies dans cet état de contrainte au-dessous de ladite température.

2. Procédé selon la revendication 1, caractérisé en ce que l'orientation des fibres par rapport à l'axe longitudinal de l'élément creux présente un angle positif dans la première couche et un angle négatif dans l'autre couche.

3. Procédé selon la revendication 1, caractérisé en ce que l'élément creux est chauffé et, pendant la refoidissement jusqu'à l'état à fort module d'élasticité de la matière synthétique, la paroi intérieur de l'élement creux est soumise à une force de pression dirigée radialement vers l'extérieur, par exemple au moyen d'un fluide sous pression, et l'élément creux est soumis à une force de traction qui, au total et en valeur absolue, est inférieure ou égale à la force de pression dirigée radialment vers l'extérieur, les angles d'orientation des fibres par rapport à l'axe longitudinal de l'élément creux étant compris entre environ 55° et environ 75°.

4. Procédé selon la revendication 1, caractérisé en ce que l'élément creux chauffé et, pendant le refoidissement jusqu'à l'état à fort module d'élasticité de la matière synthétique, la paroi intérieure de l'élément creux est sousmise à une force de pression dirigée radialment vers l'extérieur, par exemple au moyen d'un fluide sous pression, et est soumise à une force de traction agissant en direction axiale, les angles d'orientation des fibres par rapport à l'axe longitudinal de l'élément creux étant comprise entre 10° et 55°.

5. Procédé selon la revendication 1, caractérisé en ce que l'élément creux est chauffé et, pendant le refoidissement jusqu'à l'état à fort module d'élasticité de la matière synthétique, la paroi intérieure de l'élément creux est soumise à une force de pression dirigée radialement et axialement vers l'extérieur, notamment au moyen d'un fluide sous pression, l'angle d'orientation des fibres par rapport à l'axe longitudinal de l'élément creux étant d'environ 55°.

6. Procédé selon l'une des revendications 1 à 4, caractérisé en ce que l'élément creux est chauffé et, pendant le refoidissement jusqu'à l'état à fort module d'élasticité de la matière synthétique, l'élément creux est soumis à un moment de torsion.

## Claims

1. Method for the production of hollow bodies, for example tubes, tubular torsion rods, pressure vessels or the like, which are built up of fibre-reinforced synthetic material and which consist of at least two layers with fibres oriented differently relative to the longitudinal direction, which extend at least partially over the entire hollow body and the layers display synthetic material which is hard elastic at the temperature of use and are acted on by force, characterized thereby, that at least two layers, which lie one above or inside the other and in which the fibre orientation relative to the longitudinal axis of the hollow body is different, are heated up to about the range of the glass transition temperature, whereupon at least one of the layers is acted on by a force and the layers are thereupon cooled down in this state of stress to below the glass temperature.

2. Method according to claim 1, characterized thereby, that the fibre orientation in the one layer forms a positive angle relative to the longitudinal axis of the hollow body and the fibre or orientation in the other layer forms a negative angle relative to the longitudinal axis of the hollow body.

3. Method according to claim 1, characterized thereby, that the hollow body is heated and the inward wall of the hollow body is acted on by a radially outward pressure force, for example a pressure medium, and the hollow body is acted on by a tension force, which altogether and seen absolutely is equal to or smaller than the radially outward pressure force, during the cooling into the hard elastic state of the synthetic material, wherein the angles of the fibre orientation relative to the longitudinal axis of the hollow body amount to between about 55° and about 75°.

4. Method according to claim 1, characterized thereby, that the hollow body is heated and the inward wall of the hollow body is acted on by a radially outward pressure force, for example a pressure medium, and with a tension force acting in axial direction during the cooling into the hard elastic state of the synthetic material, wherein the angles of the fibre orientation angles of the fibre orientation relative to the longitudinal axis of the hollow body amount to between 10° and 55°.

5. Method according to claim 1, characterized thereby, that the hollow body is heated and the inward wall of the hollow body is acted on by a radially and axially outward pressure force, in particular by a pressure medium, during the cooling into the hard elastic state of the synthetic material, wherein the angle of the fibre orientation relative to the longitudinal axis of the hollow body amounts to about 55°.

6. Method according to one of the claims 1 to 4, characterized thereby, that the hollow body is heated and, during the cooling into the hard elastic state of the synthetic material, acted on additionally by a torsional moment.

Fig. 1

Fig. 2